Europäisches Patentamt

European Patent Office

Office européen des brevets

(11) Veröffentlichungsnummer: **0 279 806**
**B1**

(12) # EUROPÄISCHE PATENTSCHRIFT

(45) Veröffentlichungstag der Patentschrift:
**12.09.90**

(51) Int. Cl.⁵: **F16L 37/28**

(21) Anmeldenummer: **88890025.5**

(22) Anmeldetag: **03.02.88**

(54) **Druckmittelkupplung.**

(30) Priorität: **05.02.87 AT 238/87**

(43) Veröffentlichungstag der Anmeldung:
**24.08.88 Patentblatt 88/34**

(45) Bekanntmachung des Hinweises auf die Patenterteilung:
**12.09.90 Patentblatt 90/37**

(84) Benannte Vertragsstaaten:
**CH DE FR GB IT LI SE**

(56) Entgegenhaltungen:
**FR-A- 1 374 187**
**FR-A- 1 553 532**
**GB-A- 197 436**
**US-A- 2 428 637**
**US-A- 4 447 040**

(73) Patentinhaber: **HOERBIGER FLUIDTECHNIK KG, Prinz Eugen-Strasse 70, A-1040 Wien(AT)**

(72) Erfinder: **Bauregger, Erich, Hoffeldstrasse 7, A-2640 Gloggnitz(AT)**

(74) Vertreter: **Klein, Adam, Dipl.Ing., Fasangasse 49, A-1030 Wien(AT)**

## Beschreibung

Die Erfindung betrifft eine Druckmittelkupplung, insbesonders zum Ankoppeln einer druckmittelbetätigbare Elemente aufweisenden Wechselpalette an einen Druckmittelkreis bei einer Bearbeitungsmaschine, wobei deren beide Kupplungshälften je ein, jeweils in einer zentralen Durchgangsbohrung angeordnetes, federbelastetes Absperrelement aufweisen, das sie im abgekuppelten Zustand nach außen abdichtet, und wobei in der einen Kupplungshälfte eine in der Durchgangsbohrung in axialer Richtung geführte, federbelastete Stößelvorrichtung angeordnet ist, die zwei konzentrische und im abgekuppelten Zustand über eine Vorspannfeder in eine vorgegebene axiale Lage relativ zueinander gehaltene Stößelteile aufweist, deren äußerer mit einem Steckansatz der anderen Kupplungshälfte zusammenwirkt und deren innerer beim Zusammenstecken der beiden Kupplungshälften nach deren gegenseitiger Abdichtung die Absperrelemente öffnet. Eine solche Druckmittelkupplung ist im Fachgebiet allgemein bekannt.

Im Rahmen moderner Fertigungssysteme werden z.B. insbesonders bei NC-Bearbeitungszentren Wechselpaletten zur raschen Beschikkung der Bearbeitungsmaschinen verwendet, welche oft ein Werkstück-Spannsystem beinhalten, sowie eventuell auch andere Funktionen umfassen, die mit einem Druckmittel, also hydraulisch oder pneumatisch, betätigt werden. Da derartige Wechselpaletten üblicherweise auch Teil des Transportsystems für die zu bearbeitenden Werkstücke sind, müssen sie automatisch und sicher auch unter extremen Umgebungsbedingungen (Schmutz, Späne, usw.) funktionieren und insbesonders an den Druckmittelkreis bei der jeweiligen Bearbeitungsmaschine an- und abgekoppelt werden können.

Bei einer bekannten Kupplung der eingangs genannten Art ist insbesonders die an der Wechselpalette bzw. an einer vergleichbaren Baueinheit angeordnete Kupplungshälfte so ausgebildet, daß sie im freiliegenden, also abgekoppelten Zustand eine deutlich von einer durchgehenden Ebene abweichende Anschlußkontur aufweist. Die Dichtstelle für den Andockhals der anderen Kupplungshälfte ist in der einen, an der Wechselpalette vorgesehenen Kupplungshälfte versenkt, sodaß sich davor ein Hohlraum befindet, in dem sich unter den genannten extremen Umgebungsbedingungen sehr leicht Schmutz fangen kann, der dann die einwandfreie Funktion behindert und sich nur aufwendig entfernen läßt. Für das Abdichten wird dabei eine Weichdichtung verwendet, die der Verschmutzung und insbesonders den bei der Bearbeitung auftretenden Spänen ausgesetzt und dementsprechend anfällig für Beschädigungen ist. Als weiterer Nachteil dieser bekannten Kupplung ist zu nennen, daß die Bewegung der die Absperrelemente beim Einkuppeln öffnenden Stößelvorrichtung durch eine weitere, zusätzliche Dichtung gegen das Gehäuse der einen Kupplungshälfte abgedichtet werden muß.

Aufgabe der vorliegenden Erfindung ist es, eine Druckmittelkupplung der eingangs genannten Art so auszubilden, daß die genannten Nachteile der bekannten Kupplung vermieden werden und daß insbesonders die negativen Auswirkungen von Schmutz, Spänen und dergleichen in der Umgebung der die Kupplung tragenden Bauteile auf den Kupplungsvorgang vermieden werden, kein Druckmittel beim Ankoppeln verloren geht und auf alle Fälle keine Verunreinigungen in den Druckmittelkreislauf gelangen können.

Dies wird gemäß der vorliegenden Erfindung dadurch erreicht, daß die Stößelvorrichtung im abgekuppelten Zustand bis auf einen engen Führungsspalt im wesentlichen plan mit der Stirnfläche der einen Kupplungshälfte abschließt, wobei ein Führungsbereich an ihrem Außenumfang mittels einer feststehenden Weichdichtung gegen die Durchgangsbohrung abdichtet, daß die Weichdichtung einen geringeren Abstand zur Stirnfläche der einen Kupplungshälfte aufweist, als der zum Einkuppeln erforderlichen Relativbewegung der beiden Kupplungshälfte entspricht, und daß der Steckansatz der anderen Kupplungshälfte im wesentlichen gleichen Außendurchmesser aufweist, wie der Führungsbereich der Stößelvorrichtung. Damit ist einerseits erreicht, daß die üblicherweise z.B. an einer Wechselpalette angeordnete eine Kupplungshälfte im geschlossenen bzw. abgekoppelten Zustand praktisch eine Ebene mit der Einbauumgebung bildet, womit sich keine Verunreinigungen in schwer zu kontrollierenden bzw. zu reinigenden Vertiefungen ansammeln können. Die äußere Stirnfläche dieser Kupplungshälfte kann sehr leicht und damit erforderlichenfalls auch automatisch vor dem eigentlichen Einkuppeln gereinigt werden. Zur Abdichtung der beim Einkuppeln zusammenwirkenden Bereiche an beiden Kupplungshälften wird eine im abgekuppelten Zustand durch den äußeren Teil der Stößelvorrichtung geschützte Weichdichtung verwendet, die hier nun gleichzeitig die Bewegungsdichtung zwischen der Stößelvorrichtung und dem den entsprechenden Bereich der Durchgangsbohrung aufweisenden Teil des Kupplungsgehäuses bildet.

Nach einer weiteren Ausgestaltung der Erfindung ist vorgesehen, daß der die Weichdichtung tragende Bereich der Durchgangsbohrung in einem in das Gehäuse der einen Kupplungshälfte eingeschraubten Gewindering ausgebildet ist und gegenüber dem nach innen anschließenden Bereich der Durchgangsbohrung verminderten Durchmesser aufweist, und daß der äußere Stößelteil im abgekuppelten Zustand mit einer Ringschulter gegen die zwischen den beiden Bereichen gebildete Übergangsschulter anliegt. Damit ist die Herstellung und Montage der erfindungsgemäßen Kupplung sehr einfach, da der Zusammenbau von der Stirnseite her erfolgen kann, was insbesonders auch für die Wartung im eingebauten Zustand an einer Wechselpalette oder dergleichen sehr vorteilhaft ist.

Nach einer anderen vorteilhaften Weiterbildung der Erfindung weist der innere Stößelteil eine kegelige Schulter am Übergang von einem der Stirnseite der einen Kupplungshälfte zugewandten Bereich größeren Durchmessers zu einem anschließenden Bereich kleineren Durchmessers auf, welche im abgekuppelten Zustand unter der Wirkung der Vorspannfeder an einer Dichtfläche im Inneren des äußeren Stößelteils anliegt, wobei zumindest im eingekuppelten Zustand zwischen den beiden Stößelteilen eine Durchlaßöffnung gebildet ist. Im abgekuppelten Zustand ist damit also nach wie vor eine im wesentlichen durchgehende, ebene Stirnfläche der einen Kupplungshälfte gegeben; beim Einkuppeln wird die gesamte Stößelvorrichtung vorerst gegen die Wirkung der dieses belastenden Feder zufolge des eingeschobenen Teils der anderen Kupplungshälfte nach innen bewegt, wobei als erstes die Abdichtung der Durchgangsbohrung durch die am Umfang des anderen Kupplungsteils in Eingriff kommende Weichdichtung sichergestellt wird. In weiterer Folge kann der innere Stößelteil in Eingriff mit den beiden federbelasteten Absperrelementen in den beiden Kupplungshälften kommen und diese öffnen, wobei zu diesem Zeitpunkt die Durchgangsbohrung wie erwähnt bereits abgedichtet ist.

Nach einer insbesonders im letztgenannten Zusammenhang besonders vorteilhaften weiteren Ausgestaltung der Erfindung ist vorgesehen, daß der innere Stößelteil einen Stützring für die in einer topfförmigen Ausnehmung des äußeren Stößelteils angeordnete Vorspannfeder aufweist, und daß der Stützring im eingekuppelten Zustand an der der Stirnfläche der einen Kupplungshälfte abgewandten Stirnfläche des äußeren Stößelteils anliegt. Auf diese Weise wird der innere Stößelteil nach Überwindung eines zwischen dem Stützring und der inneren Stirnfläche des äußeren Stößelteils gegebenen Wegbereiches der Wirkung der Vorspannfeder von dem unmittelbar vom anderen Kupplungsteil bewegten äußeren Stößelteil direkt mitgenommen, sodaß auf einfache Weise eine sichere Funktion der Anordnung gewährleistet ist.

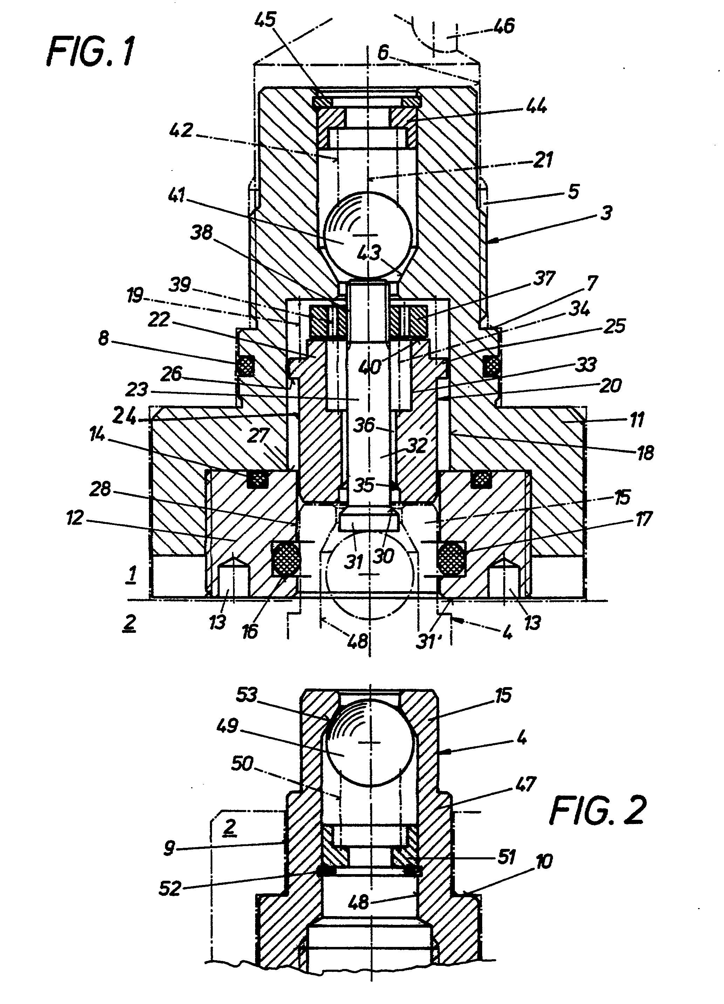

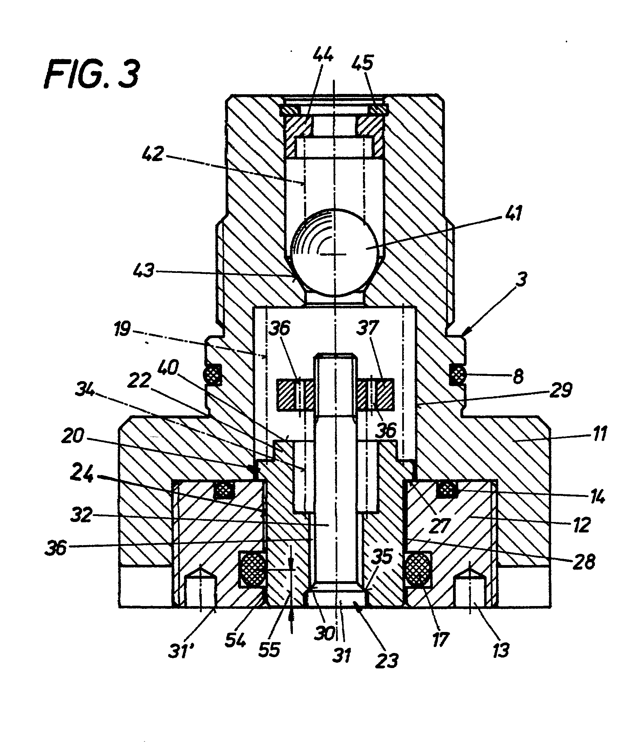

Die Erfindung wird im folgenden anhand des in der Zeichnung dargestellten Ausführungsbeispiels näher erläutert. Fig. 1 zeigt eine erfindungsgemäß ausgebildete Druckmittelkupplung im eingekuppelten Zustand, wobei die eine Kupplungshälfte durchgehend ausgezogen und die andere Kupplungshälfte nur teilweise und strichpunktiert angedeutet ist, Fig. 2 zeigt die andere Kupplungshälfte aus Fig. 1 nun ebenfalls in ganzer und durchgehend ausgezogener Darstellung und Fig. 3 zeigt die eine Kupplungshälfte aus Fig. 1 nun im abgekuppelten Zustand.

Die dargestellte Druckmittelkupplung dient zum Ankoppeln einer nicht weiter dargestellte, druckmittelbetätigbare Elemente aufweisenden Wechselpalette 1 an einen Druckmittelkreis bei einer Bearbeitungsmaschine, welche hier nur durch einen Auflageteil 2 angedeutet ist. Die eine Kupplungshälfte 3 ist in einer mit einem Gewinde 5 versehenen Aufnahmebohrung 6 der Wechselpalette 1 bis zur Anlage an eine Schulter 7 eingeschraubt und mittels eines Dichtringes 8 abgedichtet. Die andere Kupplungshälfte 4 ist - wie insbesonders aus Fig. 2 ersichtlich ist - von der in der Darstellung unteren Seite her in eine entsprechende Aufnahmebohrung 9 des Auflageteils eingesetzt und auf nicht weiter dargestellte Weise gegen eine Schulter 10 verspannt.

Im Gehäuse 11 der einen Kupplungshälfte 3 ist an der in der Darstellung unteren Seite ein Gewindering 12 eingeschraubt, der über Sacklöcher 13 unter Zuhilfenahme entsprechender, hier nicht dargestellter Werkzeuge verdrehbar ist und gegen das Gehäuse 11 mittels eines Dichtringes 14 abdichtet. In dem in Fig. 1 strichpunktiert dargestellten eingeschobenen Zustand des Steckansatzes 15 der anderen Kupplungshälfte 4 liegt eine in einer Nut 16 des Gewinderinges 12 angeordnete Weichdichtung 17 am Außenumfang des Steckansatzes 15 an und dichtet damit den Spalt zwischen dem im Gewindering 12 verlaufenden Bereich einer zentralen Durchgangsbohrung 18 der einen Kupplungshälfte 3 gegen den Steckansatz 15 der anderen Kupplungshälfte 4 ab.

In der zentralen Durchgangsbohrung 18 der einen Kupplungshälfte 3 ist eine über eine Feder 19 belastete Stößelvorrichtung 20 angeordnet, welche in Richtung der Achse 21 der Durchgangsbohrung 18 geführt ist und im wesentlichen aus zwei konzentrisch angeordneten Stößelteilen 22, 23 besteht. Der äußere Stößelteil 22, der beim Einschieben des Steckansatzes 15 des anderen Kupplungsteiles von diesem entgegen der Wirkung der Feder 19 in der Darstellung nach oben verschoben wird, weist an seiner, dem Steckansatz 15 zugewandten unteren Seite einen Führungsbereich 24 auf, der in seinem Außendurchmesser im wesentlichen dem Außendurchmesser des Steckansatzes 15 entspricht. Anschließend an den Führungsbereich 24 ist ein Ringansatz 25, der an seiner oberen Seite zur Abstützung der Feder 19 dient und an seiner unteren Seite eine Ringschulter 26 bildet, die in dem in Fig. 3 dargestellten abgekuppelten Zustand unter der Wirkung der Feder 19 gegen eine Übergangsschulter 27 zwischen dem im Gewindering 12 verlaufenden Bereich 28 der Durchgangsbohrung 18 und dem demgegenüber vergrößerten, anschließenden Bereich 29 gedrückt wird.

Der konzentrisch zum äußeren Stößelteil 22 angeordnete innere Stößelteil 23 weist eine kegelige Schulter 30 am Übergang von einem der Stirnseite 31 der einen Kupplungshälfte 3 zugewandten Bereich 31 größeren Durchmessers zu einem anschließenden Bereich 32 kleineren Durchmessers auf, welche in dem in Fig. 3 ersichtlichen abgekuppelten Zustand unter der Wirkung einer in einer topfförmigen Ausnehmung 33 des äußeren Stößelteils 22 angeordneten Vorspannfeder 34 an einer Dichtfläche 35 im Inneren des äußeren Stößelteils 22 anliegt. Zwischen den beiden Stößelteilen 22, 23 ist eine Durchlaßöffnung 36 gebildet, welche im eingekuppelten Zustand gemäß Fig. 1 offen und im abgekuppelten Zustand gemäß Fig. 3 geschlossen ist.

Der innere Stößelteil 23 weist einen Stützring 37 auf, der auf ein Gewinde 38 aufgeschraubt ist und Durchgangslöcher 39 hat. In dem in Fig. 1 dargestellten eingekuppelten Zustand liegt der Stützring 37 an der der Stirnfläche 31' der einen Kupplungshälfte 3 abgewandten Stirnfläche 40 des äußeren Stößelteils 22 an, womit eine starre Mitnahmeverbindung zwischen den beiden Stößelteilen gegeben ist. In dem in Fig. 3 dargestellten abgekuppelten Zustand ist der Stützring 37 unter der Wirkung der Vorspannfeder 34 von dieser Stirnfläche 40 abgehoben, wobei die kegelige Schulter 30 des inneren Stößelteils 23 an der Dichtfläche 35 des äußeren Stößelteils 22 anliegt.

Im in der Darstellung oberen Bereich der Durchgangsbohrung 18 der einen Kupplungshälfte 3 ist ein hier als Kugel 41 ausgebildetes und über eine Feder 42 in Richtung auf eine kegelige Dichtfläche 43 belastetes Absperrelement vorgesehen, wobei sich die Feder 42 hier über einen Federteller 44 auf einer in einer Nut der Durchgangsbohrung eingesetzten Sicherungsscheibe 45 abstützt. Am oberen Ende der Aufnahmebohrung 6 in der Wechselpalette 1 ist auch noch eine weiterführende Druckmittelleitung 46 zu erkennen.

Aus Fig. 2 ist noch ersichtlich, daß im Gehäuse 47 der anderen Kupplungshälfte 4 ebenfalls eine zentrale Durchgangsbohrung 48 vorgesehen ist, die an der in der Darstellung unteren Seite auf nicht weiter gezeichnete Weise ebenfalls in eine Druckmittelleitung mündet und an der in der Darstellung oberen Seite ein federbelastetes Absperrelement - Kugel 49, Feder 50, Federteller 51, Sicherungsscheibe 52, kegelige Dichtfläche 53 - trägt.

Insbesondere aus Fig. 3 ist zu ersehen, daß die Stößelvorrichtung 20 im abgekuppelten Zustand bis auf einen engen Führungsspalt 54 im wesentlichen plan mit der Stirnfläche 31' der einen Kupplungshälfte 3 abschließt. Die Weichdichtung 17, die einen geringeren Abstand 5 zur Stirnfläche 31' aufweist als der zum Einkuppeln der anderen Kupplungshälfte 4 erforderlichen Relativbewegung der beiden Kupplungshälften entspricht, liegt im abgekuppelten Zustand im Inneren der einen Kupplungshälfte 3 und ist somit vor Verschmutzung und Beschädigung geschützt. Die im wesentlichen plane Stirnfläche 31' kann auf sehr einfache Weise sauber gehalten werden, was ein zuverlässiges Einkuppeln sicherstellt und mithilft, das Eintreten von Verunreinigungen in den Druckmittelreislauf zu verhindern.

Zum Einkuppeln der Druckmittelkupplung wird der Steckansatz 15 der Kupplungshälfte 4 gegen die untere Seite des äußeren Stößelteils 22 gedrückt bzw. eine entsprechende Relativbewegung eingeleitet. Es wird daraufhin der äußere Stößelteil 22 aus der in Fig. 3 dargestellten Stellung in die in Fig. 1 dargestellte verschoben, wobei nach Überwindung einer entsprechenden Wegstrecke die Weichdichtung 17 am Außenumfang des Steckansatzes 15 abdichtet. Erst nachdem dies erfolgt ist kann der vom äußeren Stößelteil 22 mitgenommene innere Stößelteil 23 mit seinem in der Darstellung oberen Ende die Kugel 41 gegen die Wirkung der Feder 42 von der in Fig. 3 gezeigten Stellung in die in Fig. 1 dargestellte anheben; mehr oder weniger gleichzeitig wird die Kugel 49 von ihrem Sitz an der kegeligen Dichtfläche 53 in der anderen Kupplungshälfte 4 abgehoben, da diese andere Kupplungshälfe 4 bis zur Anlage der Wechselpalette 1 am Teil 2 weitergeschoben wurde. Damit ergibt sich der eingekuppelte Zustand nach Fig. 1, bei dem eine durchgehende und nach außen abgedichtete Verbindung von der unteren Seite der Durchgangsbohrung 48 her bis zur Druckmittelleitung 46 sichergestellt ist.

Beim Abkoppeln wird eine entsprechend umgekehrte Relativbewegung zwischen den beiden Kupplungshälften 3, 4 vorgenommen, wobei zuerst die beiden Kugeln 41, 49 an den zugehörigen kegeligen Dichtflächen 43, 53 abschließen und erst dann die Abdichtung des Steckansatzes 15 an der Weichdichtung 17 aufgehoben wird.

## Patentansprüche

1. Druckmittelkupplung, insbesonders zum Ankoppeln einer druckmittelbetätigbare Elemente aufweisenden Wechselpalette an einen Druckmittelkreis bei einer Bearbeitungsmaschine, wobei deren beide Kupplungshälften je ein, jeweils in einer zentralen Durchgangsbohrung angeordnetes, federbelastetes Absperrelement aufweisen, das sie im abgekuppelten Zustand nach außen abdichtet, und wobei in der einen Kupplungshälfte eine in der Durchgangsbohrung in axialer Richtung geführte, federbelastete Stößelvorrichtung angeordnet ist, die zwei konzentrische und im abgekuppelten Zustand über eine Vorspannfeder in eine vorgegebene axiale Lage relativ zueinander gehaltene Stößelteile aufweist, deren äußerer mit einem Steckansatz der anderen Kupplungshälfte zusammenwirkt und deren innerer beim Zusammenstecken der beiden Kupplungshälften nach deren gegenseitiger Abdichtung die Absperrelemente öffnet, **dadurch gekennzeichnet,** daß die Stößelvorrichtung (20) im abgekuppelten Zustand bis auf einen engen Führungsspalt (54) im wesentlichen plan mit der Stirnfläche (31') der einen Kupplungshälfte (3) abschließt, wobei ein Führungsbereich (24) an ihrem Außenumfang mittels einer feststehenden Weichdichtung (17) gegen die Durchgangsbohrung (18, 28) abdichtet, daß die Weichdichtung (17) einen geringeren Abstand (55) zur Stirnfläche (31') der einen Kupplungshälfte (3) aufweist als der zum Einkuppeln erforderlichen Relativbewegung der beiden Kupplungshälften (3, 4) entspricht, und daß der Steckansatz (15) der anderen Kupplungshälfte (4) im wesentlichen gleichen Außendurchmesser aufweist, wie der Führungsbereich (24) der Stößelvorrichtung (20).

2. Kupplung nach Anspruch 1, dadurch gekennzeichnet, daß der die Weichdichtung (17) tragende Bereich (28) in einem in das Gehäuse (11) der einen Kupplungshälfte (3) eingeschraubten Gewindering (12) ausgebildet ist und gegenüber dem nach innen anschließenden Bereich (29) der Durchgangsbohrung (18) verminderten Durchmesser aufweist, und daß der äußere Stößelteil (22) im abgekuppelten Zustand mit einer Ringschulter (26) gegen die zwischen den beiden Bereichen (28, 29) gebildete Übergangsschulter (27) anliegt.

3. Kupplung nach Anspruch 1 oder 2, dadurch gekennzeichnet, daß der innere Stößelteil (23) eine kegelige Schulter (30) am Übergang von einem der Stirnfläche (31') der einen Kupplungshälfte (3) zugewandten Bereich (31) größeren Durchmessers zu einem anschließenden Bereich (32) kleineren Durchmessers aufweist, welche im abgekuppelten Zustand unter der Wirkung der Vorspannfeder (34) an einer Dichtfläche (35) im Inneren des äußeren Stößelteils (22) anliegt, und daß zumindest im eingekuppelten Zustand zwischen den beiden Stößelteilen (22, 23) eine Durchlaßöffnung (36) gebildet ist.

4. Kupplung nach Anspruch 3, dadurch gekennzeichnet, daß der innere Stößelteil (23) einen Stützring (37) für die in einer topfförmigen Ausnehmung (33) des äußeren Stößelteils (22) angeordnete Vorspannfeder (34) aufweist, und daß der Stützring (37) im eingekuppelten Zustand an der der Stirnfläche (31') der einen Kupplungshälfte (3) abgewandten Stirnfläche (40) des äußeren Stößelteils (22) anliegt.

## Revendications

1. Raccord de fluide sous pression, destiné notamment à raccorder une galette interchangeable qui présente des éléments actionnés par un fluide sous pression à un circuit de fluide sous pression dans une machine-outil, raccord dans lequel les deux demi-raccords présentent chacun un élément obturateur chargé par ressort, disposé dans un perçage central traversant, et qui, dans l'état débranché, isole le demi-raccord de l'extérieur à joint étanche, et dans lequel, dans l'un des demi-raccords, est disposé un dispositif de poussoir chargé par ressort, guidé dans la direction axiale dans le perçage traversant, qui présente deux parties de poussoirs concentriques, qui sont maintenues dans une position axiale déterminée l'une par rapport à l'autre dans l'état débranché, à l'aide d'un ressort de précontrainte, la partie extérieure du poussoir coopérant avec un téton mâle de l'autre demi-raccord et la partie intérieure du poussoir ouvrant les éléments obturateurs au moment de l'emmanchement mutuel des deux demi-raccords, après que ces derniers ont été réunis joint étanche, caractérisé en ce que, dans l'état branché, le dispositif de poussoir (20) forme sensiblement un plan continu avec la surface frontale (31') d'un demi-raccord (3), à l'exception d'une étroite fente de guidage (54) cependant qu'une région de guidage (24) ferme hermétiquement le joint formé avec le passage traversant (18, 28) le long de sa circonférence extérieure à l'aide d'une garniture d'étanchéité souple fixe (17), en ce que la garniture d'étanchéité souple (17) se trouve à une distance d'écartement par rapport à la surface frontale (31') d'un demi-raccord (3) (55) qui est plus petite que celle qui correspond au mouvement relatif des deux demi-raccords (3, 4) qui est nécessaire pour le branchement et en ce que le téton mâle (15) de l'autre demi-raccord (4) présente sensiblement le même diamètre extérieur que la région de guidage (24) du dispositif de poussoir (20).

2. Raccord selon la revendication 1, caractérisé en ce que prévu que la région (28) qui porte la garniture d'étanchéité souple (17) est formée dans une bague filetée (12) vissée dans le boîtier (11) d'un demi-raccord (3) et présente un diamètre réduit comparativement à la région (29) du perçage traversant (18) qui y fait suite vers l'intérieur et en ce que, dans l'état débranché, la partie extérieure (22) du poussoir est appuyée par un épaulement annulaire (26) contre l'épaulement de jonction (27) formé entre les deux régions (28, 29).

3. Raccord selon la revendication 1 ou 2, caractérisé en ce que la partie intérieure (23) du poussoir présente un épaulement conique (30) à la jonction entre une région de plus grand diamètre dirigée vers la face frontale (31') d'un demi-raccord (3) et la région (32) de plus petit diamètre qui y fait suite, épaulement qui, dans l'état débranché, est appuyé sous l'action du ressort de précontrainte (34) contre une surface d'étanchéité (35) prévue à l'intérieur de la partie extérieure du poussoir (22), et en ce que, au moins dans l'état branché, il se forme une ouverture de passage (36) entre les deux parties (22, 23) du poussoir.

4. Raccord selon la revendication 3, caractérisé en ce que la partie intérieure (23) du poussoir présente une bague d'appui (37) pour le ressort de précontrainte (34) disposé dans un évidement (33) en forme de godet de la partie extérieure (22) du poussoir et en ce que, dans l'état branché, la bague d'appui (37) est appuyée contre la surface frontale (31') de la partie extérieure (22) du poussoir qui tourne le dos à la surface frontale (40) d'un demi-raccord (3).

## Claims

1. A pressure medium coupling, in particular for coupling an exchange pallet which has elements actuable by a pressure medium, onto a pressure medium circuit in a machine tool; wherein both the coupling halves of the said coupling each have a spring-loaded stop element, each of these latter being arranged in a central through-bore and outwardly sealing the said halves in the uncoupled state, and wherein in the one coupling half there is arranged a spring-loaded ram device which is guided in the axial direction in the through-bore; the said ram device having two concentric ram parts which in the uncoupled state are held in a predetermined axial position relative to one another by means of a pre-tensioning spring; the outer part of said ram parts co-operating with a plug-in projection of the other coupling half, and the inner part of said ram parts opening the stop elements when the two coupling halves are inserted-together after their mutual sealing; characterised in that the ram device (20), in the uncoupled state, forms a closure but leaves a narrow guide slot (54) substantially planar with the front surface (31') of the one coupling half (3), whereby a guidance region (24) on its outer periphery effects a sealing towards the through-bore (18, 28) by means of a fixedly-arranged soft seal (17); that the soft seal (17) has a spacing distance (55) – relative to the front surface (31') of the one coupling half (3) – which is less than that corresponding to the relative movement of the two coupling halves (3, 4) which is necessary for coupling engagement; and that the plug-in projection (15) of the other coupling half (4) has substantially the same external diameter as that of the guidance region (24) of the ram device (20).

2. A coupling according to claim 1, characterised in that the region (28) which carries the soft seal (17) is constructed in a screwthreaded ring (12) which is screwed into the housing (11) of the one coupling half (3), and is of reduced diameter in relation to the inwardly-adjacent region (29) of the through-bore (18); and that the outer ram part (22), in the uncoupled state, lies with an annular shoulder (26) against the transition shoulder (27) which is formed between the two regions (28, 39).

3. A coupling according to claim 1 or 2, characterised in that the inner ram part (23) has a conical shoulder (30) on the transition from a region (31) of larger diameter which faces towards the front surface (31') of the one coupling half (3), to an adjacent region (32) of smaller diameter, which shoulder (30), in the uncoupled state, under the action of the pretensioning spring (34), lies against a sealing surface (35) in the interior of the outer ram part (22); and that at least in the state of coupling engagement, a throughpassage opening (36) is formed between the two ram parts (22, 23).

4. A coupling according to claim 3, characterised in that the inner ram part (23) has a support ring (37) for the pre-tensioning spring (34) which is arranged in a cup-shaped recess (33) of the outer ram part (22); and that the support ring (37), in the state of coupling engagement, lies against the front surface (40) of the outer ram part (22) which faces away from the front surface (31') of the one coupling half (3).

FIG.1

FIG. 2

FIG. 3